(19) Europäisches Patentamt / European Patent Office / Office européen des brevets

(11) **EP 3 386 016 B1**

(12) **EUROPEAN PATENT SPECIFICATION**

(45) Date of publication and mention
of the grant of the patent:
**26.04.2023 Bulletin 2023/17**

(21) Application number: **16870191.0**

(22) Date of filing: **28.11.2016**

(51) International Patent Classification (IPC):
$H01M\ 4/04^{(2006.01)}$   $H01M\ 4/62^{(2006.01)}$
$C09J\ 7/00^{(2018.01)}$   $C09J\ 11/08^{(2006.01)}$
$C09J\ 201/00^{(2006.01)}$   $H01M\ 4/13^{(2010.01)}$
$H01M\ 10/058^{(2010.01)}$   $C09J\ 133/06^{(2006.01)}$
$H01M\ 10/0585^{(2010.01)}$   $H01M\ 10/0587^{(2010.01)}$
$H01M\ 10/0525^{(2010.01)}$   $H01M\ 4/139^{(2010.01)}$
$C09J\ 7/10^{(2018.01)}$   $H01M\ 50/417^{(2021.01)}$
$H01M\ 50/443^{(2021.01)}$   $H01M\ 50/46^{(2021.01)}$
$H01M\ 4/36^{(2006.01)}$

(52) Cooperative Patent Classification (CPC):
**H01M 4/13; C09J 7/10; C09J 11/08; C09J 201/00;
H01M 4/043; H01M 4/139; H01M 4/622;
H01M 10/0525; H01M 10/0585; H01M 10/0587;
H01M 50/417; H01M 50/443; H01M 50/461;**
H01M 4/366; Y02E 60/10;                    (Cont.)

(86) International application number:
**PCT/JP2016/004984**

(87) International publication number:
**WO 2017/094250 (08.06.2017 Gazette 2017/23)**

(54) **COMPOSITION FOR NON-AQUEOUS SECONDARY BATTERY ADHESIVE LAYER,
NON-AQUEOUS SECONDARY BATTERY ADHESIVE LAYER, AND NON-AQUEOUS
SECONDARY BATTERY**

ZUSAMMENSETZUNG FÜR WASSERFREIE SEKUNDÄRBATTERIEHAFTSCHICHT,
WASSERFREIE SEKUNDÄRBATTERIEHAFTSCHICHT, UND WASSERFREIE
SEKUNDÄRBATTERIE

COMPOSITION POUR UNE COUCHE ADHÉSIVE D'UNE BATTERIE RECHARGEABLE NON
AQUEUSE, COUCHE ADHÉSIVE D'UNE BATTERIE RECHARGEABLE NON AQUEUSE ET
BATTERIE RECHARGEABLE NON AQUEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2015 JP 2015233851**

(43) Date of publication of application:
**10.10.2018 Bulletin 2018/41**

(73) Proprietor: **Zeon Corporation**
**Tokyo 100-8246 (JP)**

(72) Inventors:
• **TANAKA, Keiichiro**
**Tokyo 100-8246 (JP)**
• **MARUHASHI, Yutaka**
**Tokyo 100-8246 (JP)**
• **OURA, Kei**
**Tokyo 100-8246 (JP)**
• **ARAI, Kenji**
**Tokyo 100-8246 (JP)**

(74) Representative: **Maiwald GmbH**
**Elisenhof**
**Elisenstraße 3**
**80335 München (DE)**

(56) References cited:
WO-A1-2010/134501   WO-A1-2012/115252
WO-A1-2014/083988   WO-A1-2015/050076
JP-A- 2014 165 108   KR-A- 20140 137 348
US-A1- 2012 058 335   US-A1- 2015 044 559

(52) Cooperative Patent Classification (CPC): (Cont.)
Y02P 70/50

**Description**

TECHNICAL FIELD

The present disclosure relates to compositions for a non-aqueous secondary battery adhesive layer, non-aqueous secondary battery adhesive layers, and non-aqueous secondary batteries.

BACKGROUND

Recently, portable terminals such as laptop personal computers, cellular phones, and personal digital assistants (PDAs) have become widespread. Lithium ion secondary batteries are widely used for secondary batteries used as a power source of such portable terminals.
A lithium ion secondary battery generally includes a separator for preventing a short circuit between the positive and negative electrodes.
Lithium ion secondary battery members such as the positive electrode, negative electrode and separator are required to have high adhesion in electrolysis solution between the members.
For example, PTL 1 proposes particulate polymers for lithium ion secondary battery binders and adhesive layers containing the particulate polymers, which exhibit superior adhesion in electrolysis solution and improve low-temperature output characteristics of lithium ion secondary batteries.
PTL 2 and PTL 3 also describe particulate polymers for lithium ion secondary battery binders.

CITATION LIST

Patent Literature

PTL 1: WO2015064411A
PTL 2: US 2015/044559 A1
PTL 3: KR 2014 0137348 A

SUMMARY

(Technical Problem)

In the current method for manufacturing a secondary battery, the step of bonding battery members, e.g., an electrode and a separator requires heating at relatively high temperatures and relatively long treatment time in order to ensure sufficient adhesion between the battery members.
The inventors established that the productivity of secondary batteries can be increased with adhesive layer compositions that provide good adhesion between battery members even under more moderate conditions, i.e., heating at lower temperatures for shorter time in the step of bonding battery members. The inventors also established adhesive layers having good adhesion can provide secondary batteries having good low-temperature output characteristics.
An object of the present disclosure is therefore to provide a composition for non-aqueous secondary battery adhesive layer which can provide an adhesive layer that exhibits good adhesion even by heat treatment at lower temperatures for shorter time. Another object of the present disclosure is to provide a non-aqueous secondary battery adhesive layer which can exhibit good adhesion. Still another object of the present disclosure is to provide a non-aqueous secondary battery having good low-temperature output characteristics.

(Solution to Problem)

A composition for non-aqueous secondary battery adhesive layer according to the present disclosure comprises organic particles and a binder,

wherein the organic particles comprise

(i) organic particles having a core-shell structure, and
(ii) organic particles having a weight-average molecular weight of 100 to 10,000, and being present in the total organic particles in a weight fraction of 4.5% to 35%,

wherein the weight-average molecular weight is measured according to the Method of Measuring Weight-Average Molecular Weight of Organic Particles described in the Examples,

wherein the core is made of a polymer comprising monomer units selected from the group consisting of (meth)acrylate monomer units, acid group-containing monomer units, cross-linkable monomer units, aromatic vinyl monomer units, fluorine-containing (meth)acrylate monomer units, fluorine-containing aromatic diene monomer units, and (meth)acrylonitrile monomer units,

wherein the shell is made of a polymer comprising monomer units selected from the group consisting of (meth)acrylate monomer units, acid group-containing monomer units, cross-linkable monomer units, aromatic vinyl monomer units, fluorine-containing (meth)acrylate monomer units, fluorine-containing aromatic diene monomer units, and (meth)acrylonitrile monomer units, and

wherein the binder is selected from a styrene-butadiene copolymer, a styrene-acrylonitrile copolymer, and a (meth)acrylate polymer.

With such a composition, it is possible to obtain an adhesive layer which exhibits good adhesion even by heat treatment at lower temperatures for shorter time.

In a composition for non-aqueous secondary battery adhesive layer according to the present disclosure, the organic particles preferably comprise a molecular weight regulator. This allows an adhesive layer to have improved adhesion and a secondary battery to have improved low-temperature output characteristics.

In a composition for non-aqueous secondary battery adhesive layer according to the present disclosure, the organic particles preferably comprise the molecular weight regulator in an amount of 0.01 to 5 parts by mass per 100 parts by mass of the organic particles. This allows an adhesive layer to have improved adhesion and a secondary battery to have improved low-temperature output characteristics.

A non-aqueous secondary battery adhesive layer according to the present disclosure is prepared by using any of the compositions for non-aqueous secondary battery adhesive layer described above. This allows the adhesive layer to exhibit good adhesion.

A non-aqueous secondary battery according to the present disclosure comprises a positive electrode, a negative electrode, a separator, and an electrolysis solution, wherein at least one of the positive electrode, the negative electrode and the separator comprises the non-aqueous secondary battery adhesive layer. This allows the non-aqueous secondary battery to exhibit good low-temperature output characteristics.

A non-aqueous secondary battery according to the present disclosure is suitable for winding type or stacking type. Inclusion of the non-aqueous secondary battery adhesive layer provides an effect of limiting the occurrence of wrinkles due to displacement of the separator upon winding or lamination, and an effect of limiting the occurrence of a short-circuit between the positive and negative electrodes.

(Advantageous Effect)

The present invention provides a composition for non-aqueous secondary battery adhesive layer which can provide an adhesive layer that exhibits good adhesion even by heat treatment at lower temperatures for shorter time. The present invention also provides a non-aqueous secondary battery adhesive layer that can exhibit good adhesion. The present invention also provides a non-aqueous secondary battery having good low-temperature output characteristics.

DETAILED DESCRIPTION

The present invention is defined by the claims. Embodiments of the present invention will be described below.

Unless otherwise indicated, numerical ranges used herein are intended to include the lower and upper limit values of the respective ranges. For example, the range 1% to 40% is intended to include the lower limit value of 1% and the upper limit value of 40% and means 1% or more to 40% or less.

By "(meth)acrylic acid" as used herein is meant at least one compound selected from the group consisting of acrylic acid, methacrylic acid, and combinations thereof. By "(meth)acrylate" as used herein is meant at least one compound selected from the group consisting of acrylate, methacrylate, and combinations thereof. By "(meth)acrylonitrile" as used herein is meant at least one compound selected from the group consisting of acrylonitrile, methacrylonitrile, and combinations thereof. By "(meth)acrylamide" as used herein is meant at least one compound selected from the group consisting of acrylamide, methacrylamide, and combinations thereof.

By "(meth)acrylonitrile monomer unit" as used herein is meant a structural unit formed by polymerizing a (meth)acrylonitrile monomer. By "cross-linkable monomer unit" as used herein is meant a structural unit formed by polymerizing a cross-linkable monomer. A cross-linkable monomer refers to a monomer that may form a cross-linked structure during or after polymerization by heating or irradiation with energy beams. By "(meth)acrylate monomer unit" as used herein is meant a structural unit formed by polymerizing a (meth)acrylate monomer. By "fluorine-containing monomer unit" as used herein is meant a structural unit formed by polymerizing a monomer having fluorine. By "acid group-containing monomer unit" as used herein is meant a structural unit formed by polymerizing a monomer having an acid group. By "aromatic vinyl monomer unit" as used herein is meant a structural unit formed by polymerization of an aromatic vinyl monomer.

In the present disclosure, measurements of the weight-average molecular weight of the organic particles are made by using the method described in Examples. In the present disclosure, the weight fraction can be determined from the tetrahydrofuran (THF) insoluble matter content described in Examples and the ratio of weight in the required molecular weight range obtained from the data of the cumulative molecular weight upon weight-average molecular weight measurement.

By "water-soluble" as used herein for a particular substance is meant that when 0.5 g of the substance is dissolved in 100 g of water at 25°C, the insoluble matter accounts for 0% to less than 1.0% by mass of the substance. By "water-insoluble" as used herein for a particular substance is meant that when 0.5 g of the substance is dissolved in 100 g of water at 25°C, the insoluble matter accounts for 90% to 100% by mass of the substance.

In a polymer produced by copolymerization of more than one monomer in the present disclosure, the proportion of a structural unit formed by polymerization of a monomer in the polymer is consistent with the proportion (blending ratio) of the monomer in the total monomers used for the polymerization of the polymer, unless otherwise indicated.

The term "monomer composition" as used herein is used to refer not only to a composition containing two or more different types of monomers, but also to a single type of a monomer.

(Composition for Non-Aqueous Secondary Battery Adhesive Layer)

A composition for non-aqueous secondary battery adhesive layer according to the present is defined in claim 1 and the claims dependent thereon. With such a composition, it is possible to obtain an adhesive layer which exhibits good adhesion even by heat treatment at lower temperatures for shorter time.

<Organic Particles>

The organic particles having a weight-average molecular weight of 100 to 10,000 (hereinafter also referred to as "molecules having a specific weight-average molecular weight") have a weight fraction in the total organic particles of 4.5% to 35%. This allows an adhesive layer to exhibit good adhesion even by heat treatment at lower temperatures for shorter time. The reason for is uncertain but is presumed to be as follows: Molecules having a specific weight-average molecular weight are lower in molecular weight than conventional particulate polymers and thus have high mobility, so that the presence of a specific proportion of such molecules having a specific weight-average molecular weight results in sufficient adhesion even by heat treatment at lower temperatures for shorter time.

The organic particles may be made of a homopolymer formed from a single type of a monomer, a copolymer formed from two or more different types of monomers, or any combination thereof.

The organic particles having a core-shell structure have a core and a shell that at least partially covers the outer surface of the core.

For example, as described in PTL1, when the core is formed of a polymer having excellent ion conductivity and the shell is formed of a polymer having excellent adhesion in electrolysis solution, it is possible to effectively enhance both adhesion in electrolysis solution of the organic particles and low-temperature output characteristics of a secondary battery.

<Organic Particles having Core-Shell Structure>

Organic particles having a core-shell structure will be described below.

<Core>

The monomer units constituting the core of organic particles having a core-shell structure are one or more monomer units selected from the group consisting of (meth)acrylate monomer unit, acid group-containing monomer unit, cross-linkable monomer unit, (meth)acrylonitrile monomer unit, fluorine-containing (meth)acrylate monomer unit, fluorine-containing aromatic diene monomer unit, and aromatic vinyl monomer unit.

It is preferred to use (meth)acrylate monomer units, acid group-containing monomer units, and cross-linkable monomer units.

(Meth)acrylate monomers are not particularly limited and those known in the art can be used. Examples of (meth)acrylate monomers include methyl acrylate, ethyl acrylate, butyl acrylate, methyl methacrylate, ethyl methacrylate, 2-ethylhexyl acrylate, and β-hydroxyethyl (meth)acrylate. Of (meth)acrylate monomers, those containing fluorine are distinguished from (meth)acrylate monomers by treating them as fluorine-containing monomers described later.

The proportion of (meth)acrylate monomers is not particularly limited and may be adjusted as appropriate. For example, the proportion is 10% or more, 20% or more, 30% or more, or 40% or more by mass of the core and for example, 96% or less, 90% or less, 80% or less, or 70% or less by mass of the core.

Examples of acid group-containing monomers include carboxyl group-containing monomers, sulfonate group-containing monomers, and phosphate group-containing monomers.

Examples of carboxyl group-containing monomers include monocarboxylic acids and dicarboxylic acids. Examples of monocarboxylic acids include acrylic acid, methacrylic acid, and crotonic acid. Examples of dicarboxylic acids include maleic acid, fumaric acid, and itaconic acid.

Examples of sulfonate group-containing monomers include vinyl sulfonic acid, methylvinyl sulfonic acid, (meth)allyl sulfonic acid, (meth)acrylic acid-2-ethyl sulfonate, 2-acrylamide-2-methyl propane sulfonic acid, and 3-allyloxy-2-hydroxypropane sulfonic acid.

Examples of phosphate group-containing monomers include 2-(meth)acryloyloxyethyl phosphate, methyl-2-(meth)acryloyloxyethyl phosphate, and ethyl-(meth) acryloyloxyethyl phosphate.

Of the acid group-containing monomers, preferred are carboxyl group-containing monomers, with monocarboxylic acids being preferred, and (meth)acrylic acid being more preferred.

The proportion of acid group-containing monomers is not particularly limited and may be adjusted as appropriate. For example, the proportion is 0.1% or more, 2% or more, 3% or more, or 5% or more by mass of the core and for example, 20% or less, 15% or less, 10% or less, or 5% or less by mass of the core.

Examples of cross-linkable monomers include multi-functional monomers having two or more polymerizable groups in the monomer. Examples of such multi-functional monomers include divinyl compounds such as divinyl benzene; di(meth)acrylate compounds such as ethylene dimethacrylate, diethylene glycol dimethacrylate, ethylene glycol dimethacrylate, diethylene glycol diacrylate, 1,3-butylene glycol diacrylate, and allyl methacrylate; tri(meth)acrylate compounds such as trimethylol propane trimethacrylate, and trimethylol propane triacrylate; and epoxy group-containing ethylenically unsaturated monomers such as allyl glycidyl ether, and glycidyl methacrylate. Of these monomers, dimethacrylate compounds and epoxy group-containing ethylenically unsaturated monomers are preferred, with dimethacrylate compounds being more preferred.

The proportion of cross-linkable monomers is not particularly limited and may be adjusted as appropriate. For example, the proportion is 0.01% or more, 0.1% or more, 0.2% or more, or 0.5% or more by mass of the core and for example, 5% or less, 4% or less, 3% or less, 1% or less, or 0.8% or less by mass of the core.

(Meth)acrylonitrile monomers are not particularly limited, and acrylonitrile, methacrylonitrile and other (meth)acrylonitrile derivatives can be used.

The proportion of (meth)acrylonitrile monomers is not particularly limited and may be adjusted as appropriate. For example, the proportion is 10% or more, 20% or more, 30% or more, 45% or more, or 50% or more by mass of the core and for example, 90% or less, 80% or less, 70% or less, 60% or less, or 55% or less by mass of the core.

Of fluorine-containing (meth)acrylate monomers and fluorine-containing aromatic diene monomers, the fluorine-containing (meth)acrylate monomers are preferred. Examples of fluorine-containing (meth)acrylate monomers include compounds represented by the general formula (I) $CH_2=CR^1COOR^2$ (where $R^1$ represents hydrogen or methyl group, and $R^2$ represents fluorine-containing hydrocarbon group). In one example, the hydrocarbon group of $R^2$ has 1 to 18 carbon atoms. $R^2$ has 1 or 2 or more fluorine atoms.

Examples of fluorine-containing (meth)acrylate monomers represented by the general formula (I) include fluorinated alkyl (meth)acrylates, fluorinated aryl (meth)acrylates, and fluorinated aralkyl (meth)acrylates. In one example, fluorine-containing (meth)acrylate monomers are fluorinated alkyl (meth)acrylates. Specific examples of such monomers include perfluoroalkyl (meth)acrylates such as 2,2,2-trifluoroethyl (meth)acrylate, β-(perfluorooctyl)ethyl (meth)acrylate, 2,2,3,3-tetrafluoropropyl (meth)acrylate, 2,2,3,4,4,4-hexafluorobutyl (meth)acrylate, 1H, 1H,9H-perfluoro-1-nonyl (meth)acrylate, 1H,1H,11H-perfluoroundecyl (meth)acrylate, perfluorooctyl (meth)acrylate, perfluoroethyl (meth)acrylate, trifluoromethyl (meth)acrylate, and 3[4[1-trifluoromethyl-2,2-bis[bis (trifluoromethyl)fluoromethyl]ethynyloxy]benzoxy]-2-hydroxypropyl (meth)acrylate.

The proportion of fluorine-containing monomers is not particularly limited and may be adjusted as appropriate. For example, the proportion is 0.1% or more or 0.5% or more by mass of the core and for example, 20% or less, or 15% or less by mass of the core. With fluorine-containing monomers being included, it provides an effect of improving low-temperature output characteristics.

Examples of aromatic vinyl monomers include styrene, α-methylstyrene, styrenesulfonic acid, butoxystyrene, and vinylnaphthalene.

The proportion of aromatic vinyl monomers is not particularly limited and may be adjusted as appropriate. For example, the proportion is 1% or more, 5% or more, or 10% or more by mass of the core and for example, 30% or less, 20% or less, or 15% or less by mass of the core.

The core may also comprise other optional structural unit(s). Examples of such optional structural units include vinyl chloride monomers such as vinyl chloride and vinylidene chloride; vinyl acetate monomers such as vinyl acetate; vinyl amine monomers such as vinyl amine; vinyl amide monomers such as N-vinyl formamide and N-vinyl acetamide; (meth)acrylic acid derivatives; (meth)acrylamide monomers such as acrylamide and methacrylamide; unsaturated dicarboxylic acid monomers; unsaturated carboxylic anhydrides such as maleic anhydride; maleimide; maleimide derivatives such as phenyl maleimide; and diene monomers such as 1,3-butadiene and isoprene.

The monomers described above may be used alone or in combination. The proportions of the respective monomer units may be adjusted as appropriate.

The glass transition temperature of the core is not particularly limited and is, for example, 0°C or above, 10°C or above, 20°C or above, 30°C or above, or 60°C or above, and for example, 150°C or below, 130°C or below, 110°C or below, 100°C or below, 90°C or below, or 80°C or below.

The core diameter is, for example, 50% or more, 60% or more, 70% or more, or 80% or more of the volume-average particle diameter (100%) of the organic particles and is, for example, 99% or less, 98.5% or less, or 98% or less of the volume-average particle diameter (100%) of the organic particles.

The core diameter can be measured as a volume-average particle diameter of a particulate polymer (core) prior to formation of shell, obtained in the process of producing organic particles. "Volume-average particle diameter" refers to a particle diameter where the cumulative volume from the fine side amounts to 50% of the entire volume in a particle size distribution measured by laser diffraction.

<Shell>

The shell at least partially covers the outer surface of the core. In one example, the shell partially covers the outer surface of the core. Even when the outer surface of the core seems to be completely covered by the shell by its appearance, the shell is treated as partially covering the outer surface of the core in cases where the shell has a pore that communicates between inside and outside of the shell. In another example, the shell entirely covers the outer surface of the core.

When the shell partially covers the outer surface of the core, ions present in electrolysis solution can easily enter the core of the organic particle. Thus, when the core has high ion conductivity, it is possible to effectively utilize high ion conductivity of the core.

The monomer units constituting the shell are one or more monomer units selected from the group consisting of (meth)acrylate monomer unit, acid group-containing monomer unit, cross-linkable monomer unit, (meth)acrylonitrile monomer unit, fluorine-containing (meth)acrylate monomer unit, fluorine-containing aromatic diene monomer unit, and aromatic vinyl monomer unit. In an example, the shell comprises an aromatic vinyl monomer unit.

The shell polymer preferably comprises an aromatic vinyl monomer unit. When the polymer constituting the shell comprises an aromatic vinyl monomer unit, the organic particles can exhibit high adhesion when immersed into electrolysis solution.

Examples of aromatic vinyl monomers include styrene, α-methylstyrene, styrenesulfonic acid, butoxystyrene, and vinyl naphthalene, with styrene and styrene derivatives such as styrenesulfonic acid being more preferred.

The shell may comprise one or more of the monomer units for core described above. The proportions of the respective monomer units may be adjusted as appropriate.

The proportion of acid group-containing monomers in the shell is not particularly limited and may be adjusted as appropriate. For example, the proportion is 0.1% or more, 1% or more, 1.5% or more, 2% or more, 3% or more, or 4% or more by mass of the shell and for example, 10% or less, 5% or less, 3.5% or less, or 2% or less by mass of the shell.

The proportion of aromatic vinyl monomers in the shell is not particularly limited and may be adjusted as appropriate. For example, the proportion is 80% or more, 85% or more, 90% or more, 95% or more, or 97% or more by mass of the shell and for example, 100% or less, 99% or less, 98% or less, or 97% or less by mass of the shell.

The glass transition temperature of the shell is not particularly limited and is, for example, 10°C or above or 20°C or above, but preferably 50°C or below particularly when adhesion at low temperatures is considered important. The glass transition temperature of the shell is, for example, 50°C or above, 60°C or above or 70°C or above, and for example, 200°C or below, 180°C or below, 150°C or below, or 120°C or below when anti-blocking property is considered important.

The average ratio of shell coverage on the core outer surface is not particularly limited and is, for example, 10% or more, 30% or more, 40% or more, or 60% or more and, for example, 99.9% or less, 98% or less, 95% or less, 90% or less, or 85% or less. With the average ratio of shell coverage on the core outer surface falling within this range, it is possible to ensure a good balance between ion conductivity and adhesion in electrolysis solution.

The average ratio of shell coverage on the core outer surface can be measured by observing the cross-sectional structures of organic particles, e.g., by the method described in PTL 1. Specifically, first, organic particles are fully dispersed in room temperature-curable epoxy resin and then embedded to form a block piece containing the organic particles. A thin slice of 80-200 nm thickness is then cut from the block piece using a microtome equipped with a diamond blade to prepare a measurement specimen. Thereafter, where necessary, the measurement specimen is subjected to dying treatment using, for example, ruthenium tetroxide or osmium tetroxide. The measurement specimen is then loaded into a transmission electron microscope (TEM), and an image of cross-sectional structures of the organic particles is captured. The magnification of the electron microscope is preferably such that a cross-section of one organic particle is within the field of view. Specifically, the magnification is preferably on the order of 10,000x. In the cross-sectional structure of a captured organic particle, length D1 (circumferential length of core, corresponding to the core outer surface) and length D2 (length of a part where the core outer surface contacts the shell) are measured. Using lengths D1 and D2 measured, the ratio of shell coverage on the core outer surface of that organic particle (Rc) is calculated by using the equation (1): ratio of coverage Rc (%) = (D2/D1) $\times$ 100. The ratio of coverage (Rc) is measured for 20 or more organic particles and an average of the measured values is regarded as the average ratio of shell coverage on the core outer surface. Although the ratio of coverage (Rc) can be calculated manually based on cross-sectional structures of organic particles, calculation can be made by using commercially available image analysis software. For example, "AnalySIS Pro" (Olympus Corporation) can be used as such commercially available image analysis software.

<Organic Particles having Non-Core-Shell Structure>

Examples of organic particles having a non-core-shell structure include single-composition organic particles that comprise one or more monomer units selected from the group consisting of (meth)acrylate monomer unit, acid group-containing monomer unit, cross-linkable monomer unit, (meth)acrylonitrile monomer unit, fluorine-containing monomer unit, and aromatic vinyl monomer unit.
The organic particles may comprise a single type of organic particles or may comprise two or more different types of organic particles.

<Molecules having Weight-Average Molecular Weight of 100 to 10,000>

The structure of molecules having a specific weight-average molecular weight as organic particles is not particularly limited and any structure can be used. For example, the molecules may have chain, cyclic, or regularly or irregularly branched dendritic shape, or any combination thereof.
The form (in composition) of the molecules having a specific weight-average molecular weight as organic particles is not particularly limited and may be the core-shell structure or non-core-shell structure described above.
The composition of the molecules having a specific weight-average molecular weight as organic particles is not particularly limited and the molecules may be a non-polymer, a homopolymer formed from a single type of a monomer, a copolymer formed from two or more different types of monomers, or any combination thereof. For example, the molecules having a specific weight-average molecular weight comprise one or more of the monomer units for core described above which are selected from the group consisting of (meth)acrylate monomer unit, acid group-containing monomer unit, cross-linkable monomer unit, (meth)acrylonitrile monomer unit, fluorine-containing (meth)acrylate or aromatic diene monomer unit, and aromatic vinyl monomer unit. The composition of the molecules having a specific weight-average molecular weight may or may not be the same as the composition of molecules having a weight-average molecular weight of greater than 10,000 in the organic particles.
The molecules having a specific weight-average molecular weight may comprise a single type of such molecules or may comprise two or more different types of such molecules.
The weight fraction of the molecules having a specific weight-average molecular weight in the organic particles is 4.5% to 35%. The weight fraction is, for example, 7% or more, or 12% or more and is, for example, 32% or less, 30% or less, 20% or less, 15% or less, 13% or less, 10% or less, 7.5% or less, or 5% or less.

<Molecular Weight Regulator>

In a composition for non-aqueous secondary battery adhesive layer according to the present disclosure, the organic particles preferably comprise a molecular weight regulator. This improves adhesion of an adhesive layer as well as low-temperature output characteristics of a secondary battery.
The molecular weight regulator is not particularly limited and can be selected as appropriate from those known in the art. Examples thereof include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide, and diisopropyl xanthogen disulfide; terpinolene; thiuram compounds such as tetramethylthiuram disulfide, tetraethylthiuram disulfide, tetramethylthiuram monosulfide, dipentamethylenethiuram tetrasulfide, N,N'-dimethyl-N,N'-diphenylthiuram disulfide, and N, N'-dioctadecyl-N,N'-diisopropylthiuram disulfide; phenolic compounds such as 2,6-di-t-butyl-4-methylphenol, and styrenated phenol; allyl compounds such as allyl alcohols; halogenated hydrocarbons such as dichloromethane, dibromomethane, carbon tetrachloride, and carbon tetrabromide; thioglycolic acid; thioglycolates such as octyl thioglycolate, and methoxybutyl thioglycolate; thiomalic acid; 2-ethylhexyl thioglycolate; diphenylethylene; α-methylstyrene dimer; and 2,2,4,6,6-pentamethylheptane-4-thiol.

These molecular weight regulators may be used alone or in combination.

The amount of the molecular weight regulator is not particularly limited and may be adjusted as appropriate. For example, the amount is 0.1 parts by mass or more, 0.3 parts by mass or more, 0.5 parts by mass or more, 0.7 parts by mass or more, or 0.8 parts by mass or more per to 100 parts by mass of the organic particles and for example, 5 parts by mass or less, 3.5 parts by mass or less, 2 parts by mass or less, or 1 part by mass or less per 100 parts by mass of the organic particles.

In compositions for non-aqueous secondary battery adhesive layer according to the present disclosure, the organic particles preferably comprise the molecular weight regulator in an amount of 0.01 to 5 parts by mass per 100 parts by mass of the organic particles. This improves adhesion of an adhesive layer as well as low-temperature output characteristics of a secondary battery.

<Volume-Average Particle Diameter of Organic Particles>

The volume-average particle diameter of the organic particles can be adjusted as appropriate. For example, the volume-average particle diameter is 0.01 μm or more, 0.1 μm or more, or 0.3 μm or more, and for example, 1 μm or less, 0.8 μm or less, or 0.6 μm or less. With the volume-average particle diameter of the organic particles being not less than the lower limit of the above range, the organic particles can have improved dispersibility. With the volume-average particle diameter of the organic particles being not greater than the upper limit of the above range, the organic particles can have increased adhesion in electrolysis solution.

The volume-average particle diameter D50 of the organic particles can be found as a particle diameter (μm) where the cumulative volume from the fine side amounts to 50% of the entire volume in a particle size distribution (volume basis) as measured by a laser diffraction particle size analyzer (LS-230, Beckman Coulter, Inc.) for an aqueous dispersion adjusted to have a solid concentration of 0.1% by mass.

<Method of Preparing Organic Particles>

Methods of preparing organic particles are not particularly limited and any method can be used. For example, organic particles having a core-shell structure can be prepared by stepwise polymerization of monomers for core and shell polymers with the ratios of these monomers being changed over time. Specifically, the organic particles can be prepared by continuous, multi-stage emulsion polymerization or multi-stage suspension polymerization wherein e.g., a polymer produced in a previous stage is sequentially covered with a polymer produced in a later stage, as described in PTL 1.

Methods of preparing organic particles having a non-core-shell structure are not particularly limited and any method can be used. When the organic particles are made of polymer, any mode of polymerization can be used such as, for example, solution polymerization, suspension polymerization, bulk polymerization, or emulsion polymerization. Any polymerization reaction can be used such as, for example, ionic polymerization, radical polymerization, or living radical polymerization. For emulsion polymerization, seed polymerization using seed particles may be employed.

<Method of Preparing Molecules having Specific Weight-Average Molecular Weight>

Methods of preparing molecules having a specific weight-average molecular weight are not particularly limited and any method can be used. The molecules may be prepared at the same time in the above-described method of preparing organic particles or may be prepared separately from the organic particles, followed by addition to either a dispersion of the organic particles or a composition for non-aqueous secondary battery adhesive layer. When the molecules having a specific weight-average molecular weight are to be prepared at the same time in the above-described method of preparing organic particles, the yield can be adjusted for example by changing the blending amount of the molecular weight regulator. There is tendency that the yield of the molecules having a specific weight-average molecular weight can be reduced or increased for example by reducing or increasing the blending amount of the molecular weight regulator. The yield can also be controlled by the amount of the reaction initiator or reaction temperature. Preparation of molecules having a specific weight-average molecular weight may also use, for example, methods of preparing oligomers and dendrimers known in the art. Such methods include various methods wherein quenching reactions are made favored over polymer growth reactions (e.g., by means of reaction temperature, polymerization inhibitors or chain transfer agents); and methods wherein polymers are decomposed. In addition, molecules, oligomers, dendrimers, polymers, of commercially available polyfunctional (meth)acrylates having a molecular weight or a weight average molecular weight in the range of 100 to 10,000 may be used.

The organic particles are present in particulate form in compositions for non-aqueous secondary battery adhesive layer. In adhesive layers prepared by using the compositions, the form of the organic particles is not particularly limited and the organic particles may be present in particulate or any other form.

<Binder>

With the use of binders, it is possible to enhance mechanical strength of the adhesive layer. Further, binders can improve adhesion of the adhesive layer.

Binders are selected from styrene-butadiene copolymers, styrene-acrylonitrile copolymers, and (meth)acrylate polymers.

These binders may be used alone or in combination.

The amount of binders may be adjusted as appropriate. For example, the amount is 0.1 parts by mass or more or 0.2 parts by mass or more per 100 parts by mass of the organic particles and for example, 30 parts by mass or less or 20 parts by mass or less per 100 parts by mass of the organic particles.

<Other Components>

Compositions for non-aqueous secondary battery adhesive layer may comprise other components known in the art for use in adhesive layer compositions. For example, compositions for non-aqueous secondary battery adhesive layer may comprise solvents; water-soluble polymers such as carboxymethylcellulose and salts thereof; non-conductive fibers such as cellulose fiber; non-conductive particles such as alumina particles; isothiazoline compounds; chelate compounds; pyrithione compounds; dispersants; leveling agents; antioxidants; thickeners; antifoaming agents; wetting agents; and additives for electrolysis solution having a function of suppressing decomposition of electrolysis solution.

The solvent can be selected as appropriate from water and organic solvents. It is preferred to use water as solvent. Examples of organic solvents include cyclic aliphatic hydrocarbon compounds such as cyclopentane and cyclohexane; aromatic hydrocarbon compounds such as toluene and xylene; ketone compounds such as acetone, ethyl methyl ketone, and cyclohexanone; ester compounds such as ethyl acetate, butyl acetate, $\gamma$-butyrolactone, and $\varepsilon$-caprolactone; nitrile compounds such as acetonitrile and propionitrile; ether compounds such as tetrahydrofuran and ethylene glycol diethyl ether; alcohol compounds such as methanol, ethanol, isopropanol, ethylene glycol, and ethylene glycol monomethyl ether; and amide compounds such as N-methylpyrrolidone (NMP) and N,N-dimethylformamide. These solvents may be used alone or in combination. In one example, the solvent is water.

The amount of the adhesive layer per unit area is not particularly limited and may be adjusted as appropriate. It is preferably 0.1 g/m$^2$ or more, but preferably 1.5 g/m$^2$ or less.

The thickness of the adhesive layer is not particularly limited and may be adjusted as appropriate. The thickness of the adhesive layer is preferably 0.1 $\mu$m or more, more preferably 0.2 $\mu$m or more, and particularly preferably 0.5 $\mu$m or more, but preferably 5 $\mu$m or less, more preferably 4 $\mu$m or less, and particularly preferably 3 $\mu$m or less.

<Method of Preparing Composition for Non-aqueous Secondary Battery Adhesive Layer >

Methods of preparing compositions for non-aqueous secondary battery adhesive layer are not particularly limited. For example, the adhesive layer compositions can be prepared by dissolving or dispersing organic particles, binder and other optional components into solvent. Specifically, a dispersing machine such as ball mill, sand mill, bead mill, pigment disperser, grinding machine, ultrasonic disperser, homogenizer, planetary mixer or FILMIX is used to disperse or dissolve organic particles, binder and other optional components into solvent to prepare compositions for non-aqueous secondary battery adhesive layer. When using an aqueous dispersion of organic particles, molecules having a specific weight-average molecular weight may be included in the aqueous dispersion. Alternatively, molecules having a specific weight-average molecular weight may be prepared separately from the aqueous dispersion of organic particles which is free from molecules having a specific weight-average molecular weight, and then the molecules having a specific weight-average molecular weight and the aqueous dispersion may be dissolved or dispersed into solvent together with a binder as described above.

(Non-Aqueous Secondary Battery Adhesive Layer)

A non-aqueous secondary battery adhesive layer according to the present disclosure is prepared by using the composition for non-aqueous secondary battery adhesive layer described above. As a result, the adhesive layer can exhibit good adhesion.

A non-aqueous secondary battery adhesive layer according to the present disclosure is applied on at least one side of a substrate (e.g., separator or electrode) with or without other intervening layer(s) such as porous film or heat resistant layer to form a battery member having an adhesive layer (laminate). The adhesive layer bonds the battery member having the adhesive layer and another battery member. In this case, the other battery member may or may not have the adhesive layer.

Depending on the structure of a secondary battery, the adhesive layer may be provided only on one side of a separator or electrode with or without other intervening layer(s) or may be provided on both sides of a separator or an electrode with or without other intervening layer(s). For example, when a separator is used as a substrate, it is preferred to form the adhesive layer on both sides of the separator, and when an electrode is used as a substrate, it is preferred to form the adhesive layer on one side of the electrode, particularly on an electrode mixed material layer.

The non-aqueous secondary battery adhesive layer may be used to bond a battery member and a battery container such as an aluminum packing case (casing).

<Method of Forming Non-aqueous Secondary Battery Adhesive Layer>

A non-aqueous secondary battery adhesive layer according to the present disclosure can be formed for example by applying the composition for non-aqueous secondary battery adhesive layer described above on at least one side of an electrode or a separator as a substrate, and drying the composition.

As described above, a non-aqueous secondary battery adhesive layer according to the present disclosure can be formed even by heat treatment at lower temperatures for shorter time as well as can exhibit good adhesion because the composition for non-aqueous secondary battery adhesive layer described above is used. Various conditions can be set by treatment temperature, time and pressure; the heating temperature can be, for example, 25°C to 90°C and the treatment time can be, for example, 0.01 to 30 minutes.

(Non-Aqueous Secondary Battery)

A non-aqueous secondary battery according to the present disclosure comprises a positive electrode, a negative electrode, a separator, and an electrolysis solution, wherein at least one of the positive electrode, the negative electrode and the separator comprises the non-aqueous secondary battery adhesive layer. This allows the non-aqueous secondary battery to exhibit good low-temperature output characteristics.

In one example, a non-aqueous secondary battery according to the present disclosure comprises the non-aqueous secondary battery adhesive layer provided on one or both sides of a separator substrate with or without other intervening layer(s). In one example, the positive electrode and separator are bonded and integrated with each other by way of the non-aqueous secondary battery adhesive layer. In another example, the negative electrode and separator are bonded and integrated with each other by way of the non-aqueous secondary battery adhesive layer. In yet another example, the positive electrode, separator, and negative electrode are bonded and integrated with one another by way of the non-aqueous secondary battery adhesive layer.

Positive and negative electrodes, separator and electrolysis solution used in the non-aqueous secondary battery are not particularly limited and can be selected as appropriate from those used in non-aqueous secondary batteries.

The electrodes (positive and negative electrodes) can be, for example, electrodes having an electrode mixed material layer formed on a current collector.

The current collector can be made of metal material such as iron, copper, aluminum, nickel, stainless steel, titanium, tantalum, gold, or platinum.

The current collector for negative electrode is preferably a current collector made of copper.

The current collector for positive electrode is preferably a current collector made of aluminum.

The electrode mixed material layer can be, for example, a layer containing an electrode active material and a binder (electrode mixed material layer binder).

Examples of electrode active materials for positive electrode (positive electrode active materials) include inorganic compounds such as transition metal oxides, composite oxides of lithium and transition metals, and transition metal sulfides; and organic compounds such as conductive polymers such as polyacetylene and poly-p-phenylene. Examples of transition metals include Fe, Co, Ni, and Mo. Specific examples of inorganic compounds used for positive electrode active materials include lithium-containing composite metal oxides such as $LiCoO_2$, $LiNiO_2$, $LiMnO_2$, $LiMn_2O_4$, $LiFePO_4$, and $LiFeVO_4$; transition metal sulfides such as $TiS_2$, $TiS_3$, and amorphous $MoS_2$; and transition metal oxides such as $Cu_2V_2O_3$, amorphous $V_2O-P_2O_5$, $MoO_3$, $V_2O_5$, and $V_6O_{13}$. These positive electrode active materials may be used alone or in combination.

Examples of negative electrode active materials include carbonaceous materials such as amorphous carbon, graphite, natural graphite, mesocarbon microbeads, and pitch type carbon fibers; and conductive polymers such as polyacene. Also included are metals such as silicon, tin, zinc, manganese, iron, nickel, and alloys thereof; oxides of the foregoing metals or alloys; and sulfates of the foregoing metals or alloys. Also usable are lithium; lithium alloys such as lithium-Al, Li-Bi-Cd, and Li-Sn-Cd; lithium transition metal nitrides; and silicon. Further, electrode active materials having conductive materials deposited on the surface by mechanical modification may be used. These negative electrode active materials may be used alone or in combination.

Examples of electrode mixed material layer binders include those comprising an aromatic vinyl monomer unit and an aliphatic conjugated diene monomer unit. Aromatic vinyl monomers are the same as those for the compositions for non-aqueous secondary battery adhesive layer described above. Examples of aliphatic conjugated diene monomers include 1,3-butadiene, 2-methyl-1,3-butadiene, 2,3-dimethyl-1,3-butadiene, 2-chloro-1,3-butadiene, substituted linear conjugated pentadienes, and substituted and side-chain conjugated hexadienes. These monomers may be used alone or in combination. Of them, 1,3-butadiene is preferred.

A method of manufacturing a non-aqueous secondary battery electrode according the present disclosure includes: stacking the non-aqueous secondary battery adhesive layer described above and an electrode; and pressing the non-aqueous secondary battery adhesive layer and the electrode.

The separator is not particularly limited and any separator known in the art can be used. Examples of separators include microporous membranes, porous membranes and nonwoven fabrics which comprise polyolefin resin such as polyethylene, polypropylene, polybutene or polyvinyl chloride, or aromatic polyamide resin; porous resin coats which comprise inorganic ceramic powder; microporous membranes made of resin such as polyethylene terephthalate, polycycloolefin, polyether sulfone, polyamide, polyimide, polyimideamide, polyaramid, nylon or polytetrafluoroethylene or woven fibers of polyolefin, or nonwoven fabrics thereof; and aggregates of insulating material particles.

To stabilize conveyance during adhesive layer application by increasing the strength of the separator substrate, it is more preferred to use a separator substrate formed of a mixture of polyethylenes (polyethylene composition) which comprises 30% to 70% by mass of ultrahigh molecular weight polyethylene having a weight-average molecular weight (Mw) of $1\times10^6$ or more and 30% to 70% by mass of (high density) polyethylene having a Mw of $1\times10^4$ to less than $8\times10^5$. The Mw of polyethylene can be measured by gel permeation chromatography (GPC).

The separator substrate can have any thickness, preferably 3 to 30 $\mu$m, more preferably 4 to 20 $\mu$m, and even more preferably 5 to 18 $\mu$m. When the thickness of the separator substrate is 3 $\mu$m or more, safety is further enhanced. When the thickness of the separator substrate is 30 $\mu$m or less, it is possible to limit reductions in ion conductivity, to limit reductions in low-temperature output characteristic of a secondary battery, as well as to limit increases in thermal contraction of the separator substrate for improved heat resistance.

The electrolysis solution is not particularly limited and can be selected as appropriate from those known in the art. Typically used is an organic electrolysis solution obtained by dissolving a supporting electrolyte into an organic solvent. For example, when the non-aqueous secondary battery is a lithium ion secondary battery, a lithium salt is used as the supporting electrolyte. Examples of lithium salts include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred in that they easily dissolve in solvent and exhibit a high degree of dissociation, with $LiPF_6$ being particularly preferred.

These electrolytes (supporting electrolytes) may be used alone or in combination.

Solvents used for the electrolysis solution are not particularly limited so long as they can dissolve supporting electrolytes and can be selected as appropriate from those known in the art. Examples of solvents include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide.

In one example, the solvent is one or more carbonates selected from the group consisting of dimethyl carbonate, ethylene carbonate, diethyl carbonate, propylene carbonate, butylene carbonate, and ethyl methyl carbonate. In another example, the solvent is a mixed solution of EC and EMC. In yet another example, the solvent is a mixed solution of EC, EMC and DEC. The mixing ratio of solvents in the mixed solutions may be appropriately adjusted

Any additive known in the art, such as vinylene carbonate (VC), fluoroethylene carbonate (FEC) or ethyl methyl sulfone, may be added to the electrolysis solution.

The shape of the secondary battery is not particularly limited and can be selected as appropriate. Examples include coin, button, sheet, cylindrical, square, and planar shapes. A non-aqueous secondary battery according to the present disclosure is suitable for winding type or stacking type. Inclusion of the non-aqueous secondary battery adhesive layer provides an effect of limiting the occurrence of wrinkles due to displacement of the separator upon winding or lamination, and an effect of limiting the occurrence of a short-circuit between the positive and negative electrodes.

<Method of Manufacturing Non-Aqueous Secondary Battery>

A method of manufacturing a non-aqueous secondary battery according to the present disclosure is not particularly limited except that the non-aqueous secondary battery adhesive layer described above is used for at least one of a positive electrode, a negative electrode, and a separator. Any non-aqueous secondary battery known in the art can be used.

For example, a non-aqueous secondary battery can be manufactured by stacking a positive electrode and a negative electrode with a separator provided therebetween, rolling or folding the resulting laminate as necessary in accordance with the battery shape, placing it in a battery container, filling the battery container with an electrolysis solution, and sealing the container. The non-aqueous secondary battery may also include, for example, an overcurrent preventing device such as a fuse or a PTC device; expanded metal; and/or a lead plate.

EXAMPLES

The present disclosure will now be described in detail by way of Examples, which are illustration purposes only and shall not be construed to limit the scope of the present disclosure. Unless otherwise indicated, blending amounts are on a mass basis.

Adhesive layers prepared by using compositions for non-aqueous secondary battery adhesive layer which comprise Organic Particles 1 to 13 (later described) and non-aqueous secondary batteries which comprise the adhesive layers are referred to as Examples 1 to 13, respectively. Adhesive layers prepared by using compositions for non-aqueous secondary battery adhesive layer which comprise Comparative Organic Particles 1 and 2 (later described) and non-aqueous secondary batteries which comprise the adhesive layers are referred to as Comparative Examples 1 and 2, respectively.

<Method of Measuring Weight-Average Molecular Weight of Organic Particles>

(Preparation of Sample for Weight-Average Molecular Weight Measurement)

A dispersion of organic particles was cast on a fluororesin petri dish and allowed to stand at room temperature for 48 hours for drying to afford a powder or dry film. The powder or dry film was pressed at 200°C and 5 MPa for 1 minute to afford a film of organic particles (polymer) having a thickness of $3 \pm 0.3$ mm, which was then cut into a substantially square of 5 mm each side to prepare a dry film piece. The prepared dry film piece was weighed accurately and the weight of the dry film piece was defined as $W_0$. Next, the dry film piece was immersed in 100 g of THF at 23°C to 25°C for 24 hours for dissolution. The residual film piece withdrawn from THF was subjected to vacuum drying for 3 hours in an environment of 105°C and precisely weighed. The weight of the residual film piece was defined as $W_1$. Using the precise weight values, THF insoluble matter content was calculated by using the equation (I): %THF insoluble matter content = $(W_1/W_0) \times 100...(I)$

%THF insoluble matter content obtained herein refers to a fraction of high molecular weight components having a weight-average molecular weight of greater than 10,000 contained in organic particles. After adjusting the solution such that the concentration of solids dissolved in THF is about 0.5 g/L, the solution was gently filtered through a 0.45 $\mu$m filter to prepare a measurement sample.

(Device for Measuring Weight-Average Molecular Weight and Measurement Conditions>

Measurement device and measurement conditions are as follows:

$$\text{Column: TSK gel } \alpha\text{-M columns} \times 2 \text{ ($\varphi$ 7.8 mm I.D.} \times 30 \text{ cm} \times 2$$

(Tosoh Corporation))

Eluent: tetrahydrofuran
Flow rate: 0.5 mL/min.
Sample concentration: about 0.5 g/L (solid concentration)
Injection volume: 200 $\mu$L
Column temperature: 40°C
Detector: differential refractive index detector RI (HLC-8320 GPC RI detector, Tosoh Corporation)
Detector conditions: RI: Pol (+), Res (1.0s)
Molecular weight marker: Standard polystyrene kit (PStQuick Kit-H, Tosoh Corporation)

Adhesion of the adhesive layers (adhesion between the positive electrode and adhesive layer, and adhesion between the negative electrode and adhesive layer) of Examples and Comparative Examples and low-temperature output characteristics of the secondary batteries of Examples and Comparative Examples were measured and evaluated by the methods described below. The results are set forth in Table 1.

<Adhesion>

A positive electrode and a separator (single side-coated separator) manufactured by the method described later were cut into 10 mm-width pieces and stacked on top of each other such that the adhesive layer of the separator and the positive electrode mixed material layer of the positive layer face each other to prepare a stacked test specimen. The stacked test specimen was pressed at 80°C or 75°C for 15 seconds under a pressure of 0.45 MPa. An adhesive cellophane tape was attached to the surface of the positive electrode with the current collector side surface of the positive electrode facing down. An adhesive cellophane tape specified in JIS Z1522 was used. The adhesive cellophane tape was affixed to a horizontal test stage beforehand. Subsequently, the stress at the time when the separator of the stacked test specimen was peeled by pulling up one end in the vertical direction at a pulling rate of 50 mm/min was measured. The measurement was made 3 times. The stress measurement was made 3 times also for a stacked test specimen prepared similarly except that a negative electrode prepared by the method described below was used. An average of 6 stress measurements was recorded as peel strength. In the following criteria, rank A represents best adhesion.

A: peel strength $\geq$ 10 N/m
B: 5 N/m $\leq$ peel strength < 10 N/m
C: peel strength < 5 N/m

<Low-Temperature Output Characteristics>

A winding type lithium ion secondary battery with a discharge capacity of 800 mAh manufactured by the method described later was allowed to stand for 24 hours in an environment of 25°C and charged at 0.1C for 5 hours in an environment of 25°C. Voltage V0 at that time was measured. The lithium ion secondary battery was then discharged at 1C in the environment of -10°C and voltage V1 15 seconds after initiation of discharging was measured. Voltage change $\Delta V$ given by the equation $\Delta V = V0 - V1$ was calculated. A smaller voltage change $\Delta V$ indicates superior low-temperature output characteristics.

A: $\Delta V$ < 350 mV
B: 350 mV $\leq \Delta V$ < 500 mV
C: $\Delta V \geq$ 500 mV

<Preparation of Organic Particles 1 to 3 and Comparative Organic Particles 1 and 2>

Organic Particles 1 to 3 and Comparative Organic Particles 1 and 2 were prepared according to the procedure described below by using the monomer compositions for core and shell and the molecular weight regulators in amounts set forth in Table 1.
A monomer composition for core, 0.3 parts by mass of sodium dodecylbenzenesulfonate as an emulsifier, 150 parts by mass of ion-exchanged water, and 0.5 parts by mass of potassium persulfate as a polymerization initiator were charged into a vessel equipped with a stirrer and stirred thoroughly. Temperature was raised to 65°C by heating to initiate polymerization. Polymerization was continued until the polymerization conversion rate reached 96% whereby an aqueous dispersion containing a particulate polymer for core was prepared. The aqueous dispersion was then heated to 75°C. A monomer composition for shell was continuously fed to the aqueous dispersion over 40 minutes to continue polymerization. Once the polymerization conversion rate reached 96%, the reaction was quenched by cooling to prepare an aqueous dispersion containing organic particles for adhesive layer. It was confirmed by the observation of cross sections of the organic particles that the shell was composed of polymer particles. Organic Particles 1 obtained had a volume-average particle diameter of 0.45 $\mu$m.

<Preparation of Organic Particles 4>

Organic particles were prepared by the same procedure as for Organic Particles 1 using the monomer compositions for core and shell and the molecular weight regulator in amounts set forth in Table 1. The weight fraction of molecules having a specific Mw in the aqueous dispersion of the organic particles was 0.1%. While stirring the organic particles, molecules having a weight-average molecular weight of 8,000 described later were added and mixed so that the weight fraction of the molecules with respect to a total of the organic particles and the polymer was 32%, and the mixture was stirred for 24 hours at room temperature to afford an aqueous dispersion of Organic Particles 4 of Example 4.

<Preparation of Organic Particles 5>

Organic particles were prepared by the same procedure as for Organic Particles 1 using the monomer compositions for core and shell and the molecular weight regulator in amounts set forth in Table 1. The weight fraction of molecules having a specific Mw in the aqueous dispersion of the organic particles was 0.1%. While stirring the organic particles, molecules having a weight-average molecular weight of 4,000 described later were added and mixed so that the weight fraction of the molecules with respect to a total of the organic particles and the polymer was 32%, and the mixture was stirred for 24 hours at room temperature to afford an aqueous dispersion of Organic Particles 5 of Example 5.

<Preparation of Organic Particles 6 to 13>

Organic Particles 6 to 13 were prepared by the following procedure using the monomer compositions for core and shell and the molecular weight regulator in amounts set forth in Table 1.
120 parts by mass of ion-exchanged water was added to a reactor equipped with a stirrer, sufficiently stirred and warmed to 65°C, after which 0.5 parts by mass of potassium persulfate as a polymerization initiator was added. 10 minutes after the completion of addition, an emulsion containing a monomer composition for core, 0.3 parts by mass of sodium dodecylbenzene sulfonate as an emulsifier, and 30 parts by mass of ion exchanged water was added over 2.5 hours to initiate polymerization at 65°C. Polymerization was continued until the polymerization conversion rate reached 96% whereby an aqueous dispersion containing a particulate polymer for core was prepared. The aqueous dispersion was then heated to 75°C. A monomer composition for shell was continuously fed to the aqueous dispersion over 40 minutes to continue polymerization. Once the polymerization conversion rate reached 96%, the reaction was quenched by cooling to prepare an aqueous dispersion containing organic particles for adhesive layer. It was confirmed by the observation of cross sections of the organic particles that the shell was composed of polymer particles. Organic Particles 6 obtained had a volume-average particle diameter of 0.40 $\mu$m. Organic Particles 13 were obtained similarly except that only polymerization for core was carried out.

Table 1

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|
| Organic particles | **Monomer composition for core (parts by mass)** | | | | | | | | | | | | | | | |
| | Acrylonitrile | 36.5 | 0 | 0 | 36.5 | 36.5 | 36.5 | 30 | 10 | 36.5 | 36.5 | 36.5 | 0 | 36.5 | 0 | 36.5 |
| | Methyl methacrylate | 0 | 39 | 39 | 0 | 0 | 0 | 6.5 | 26.5 | 0 | 0 | 0 | 39 | 29.5 | 39 | 0 |
| | Butylacrylate | 31 | 27.5 | 28 | 31 | 31 | 31 | 31 | 31 | 31 | 31 | 31 | 28 | 31 | 27.5 | 31 |
| | Ethylene dimethacrylate | 0 | 0.5 | 0 | 0 | 0 | 0.5 | 0.5 | 0.5 | 0 | 0 | 0 | 0 | 0 | 0.5 | 0 |
| | Allyl methacrylate | 0.08 | 0 | 0.1 | 0.08 | 0.08 | 0 | 0 | 0 | 0.08 | 0.1 | 0.08 | 0.1 | 0.08 | 0 | 0.08 |
| | Methacrylic acid | 2.4 | 3 | 3 | 2.4 | 2.4 | 3 | 3 | 3 | 2.4 | 2.4 | 2.4 | 3 | 2.9 | 3 | 2.4 |
| | t-Dodecyl mercaptan | 0.4 | 0.2 | 0.7 | 0 | 0 | 0 | 0.4 | 0.4 | 0.4 | 0.4 | 0.4 | 0.7 | 0.8 | 0 | 1 |
| | α-Methyl styrene dimer | 0 | 0 | 0 | 0 | 0 | 1.1 | 0 | 0 | 0 | 0 | 0 | 0 | 0 | 0 | 0 |
| | **Monomer composition for shell (parts by mass)** | | | | | | | | | | | | | | | |
| | Styrene | 29.5 | 29.7 | 30 | 29.5 | 29.5 | 29.5 | 29 | 29 | 0 | 19.7 | 19.5 | 19.5 | 0 | 30 | 29.5 |
| | Methyl methacrylate | 0 | 0 | 0 | 0 | 0 | 0 | 0 | 0 | 29.5 | 0 | 0 | 0 | 0 | 0 | 0 |
| | Butyl acrylate | 0 | 0 | 0 | 0 | 0 | 0 | 0 | 0 | 0 | 0 | 0 | 0 | 0 | 0 | 0 |
| | Acrylonitrile | 0 | 0 | 0 | 0 | 0 | 0 | 0 | 0 | 0 | 10 | 10 | 10 | 0 | 0 | 0 |
| | Methacrylic acid | 0.5 | 0.3 | 0 | 0.5 | 0.5 | 0.5 | 1 | 1 | 0.5 | 0.3 | 0.5 | 0 | 0 | 0 | 0.5 |
| | t-Dodecyl mercaptan | 0.4 | 0.7 | 0.3 | 0 | 0 | 0 | 0.4 | 0.4 | 0.4 | 0.4 | 0.4 | 0.3 | 0 | 0 | 0.8 |
| | α-Methyl styrene dimer | 0 | 0 | 0 | 0 | 0 | 0.1 | 0 | 0 | 0 | 0 | 0 | 0 | 0 | 0 | 0 |
| | Total of molecular weight regulators of core and shell (parts by mass) | 0.8 | 0.9 | 1 | 0 | 0 | 1.2 | 0.8 | 0.8 | 0.8 | 0.8 | 0.8 | 1 | 0.8 | 0 | 1.8 |
| | Weight fraction of molecules having specific weight-average molecular weight (%)*1 | 7.2 | 4.6 | 12.5 | 32 | 32 | 5.3 | 7.9 | 9.1 | 6.8 | 6.9 | 7.1 | 12.5 | 7.4 | 0.1 | 50 |

| Performance evaluation | | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Comp. Ex. 1 | Comp. Ex. 2 |
|---|---|---|---|---|---|---|---|---|---|---|---|---|---|---|---|---|
| Performance evaluation | Adhesion (80°C) | A | B | A | B | A | A | A | A | A | A | A | A | B | C | A |
| | Adhesion (75°C) | A | B | A | B | B | B | A | A | B | A | A | A | B | C | A |
| | Low-temperature output characteristics | A | A | B | B | B | A | A | B | B | A | A | B | A | B | C |

\*1: In Example 4, a separately prepared polymer having a weight-average molecular weight of 8,000 was added to prepared organic particles having a core-shell structure to adjust the weight fraction to 32%. In Example 5, a separately prepared polymer having a weight-average molecular weight of 4,000 was added to prepared organic particles having a core-shell structure to adjust the weight fraction to 32%.

<Preparation of Molecules (Polymer) having Weight-Average Molecular Weight of 8,000>

5 parts by mass of methacrylic acid, 10 parts by mass of styrene, 60 parts by mass of methyl methacrylate, 15 parts by mass of 2-ethylhexyl acrylate, 10 parts by mass of butyl acrylate, 0.5 parts by mass of polyoxyethylene nonyl propenyl phenyl ether sulfate ammonium salt, 0.7 parts by mass of octyl thioglycolate and 150 parts by mass of deionized water were charged into a nitrogen-purged reactor equipped with a stirrer and the temperature was raised to 80°C while stirring. Aqueous solution of initiator obtained by dissolving 1.0 part by mass of ammonium sulfate into 10 parts by mass of ion exchanged water was added and reaction was performed for 4 hours. After the reactor was cooled, an amount of ammonia water required for neutralization was added, and the solid concentration was adjusted to afford 25% aqueous solution of water-soluble neutralized resin. The obtained resin had a glass transition temperature of 65°C and a weight average molecular weight of 8,000.

<Preparation of Molecules (Polymer) having a Weight-Average Molecular Weight of 4,000>

Molecules having a weight average molecular weight of 4,000 were prepared in the same manner as the molecules having a weight-average molecular weight of 8,000 except that 1.1 parts by weight of octyl thioglycolate was used.

<Preparation of Adhesive Layer Binder>

70 parts by mass of ion-exchanged water, 0.1 parts by mass of sodium lauryl sulfate ("EMAL 2F", Kao Chemicals) as an emulsifier and 0.5 parts by mass of ammonium persulfate were charged into a reactor equipped with a stirrer, the gas phase was purged with nitrogen gas, and the temperature was raised to 60°C. In another vessel, 50 parts by mass of ion-exchanged water, 0.5 parts by mass of sodium dodecylbenzenesulfonate as a dispersant, 95 parts by mass of butyl acrylate as a (meth)acrylate monomer, 2 parts by mass of acrylonitrile, 2 parts by mass of methacrylic acid, and 1 part by mass of N-methylol acrylamide were mixed to afford a monomer mixture. The monomer mixture was continuously added to the reactor over 4 hours to effect polymerization at 60°C. After completion of addition, the reaction mass was stirred for further 3 hours at 70°C, and the reaction was completed to afford a water dispersion containing an adhesive layer binder. The adhesive layer binder had a volume-average particle diameter D50 of 0.36 $\mu$m and a glass transition temperature of -40°C.

<Preparation of Composition for Non-Aqueous Secondary Battery Adhesive Layer>

To 100 parts by mass of solids of the prepared aqueous dispersion containing organic particles were added 15 parts by mass of solids of the prepared aqueous dispersion containing an adhesive layer binder, 2 parts by mass of solids of ethylene oxide-propylene oxide copolymer (solid concentration: 70% by mass, polymerization ratio: 5/5 (by mass)), and 0.0005 parts by mass of solids of 1,2-benzisothiazolin-3-one (solid concentration: 5.0% by mass) and ion-exchanged water was further mixed so that the solid concentration was 15% by mass to prepare a slurry composition for non-aqueous secondary battery adhesive layer.

<Preparation of Separator>

As a separator for evaluating low-temperature output characteristics of a secondary battery, a polyethylene porous substrate (manufactured by sequential biaxial stretching method; made of polyethylene composition which comprises 40% by mass of ultrahigh molecular weight polyethylene having a Mw of $2.4 \times 10^6$ and 60% by mass of high density polyethylene having a Mw of $2.6 \times 10^5$; 16 $\mu$m thickness; Gurley value: 210 s/100 cc) was provided as a separator substrate. The prepared composition for non-aqueous secondary battery adhesive layer was applied on both sides of the separator substrate by spin coating and dried at 50°C for 1 minute. In this way, adhesive layers of 1 $\mu$m thickness each were formed on both sides of the separator substrate to prepare a coated separator. As a separator for adhesion evaluation, a coated separator having an adhesive layer similarly formed only on one side of a separator substrate was prepared.

<Preparation of Negative Electrode>

A 5MPa pressure-resistant vessel equipped with a stirrer was charged with 33.5 parts by mass of 1,3-butadiene, 3.5 parts by mass of itaconic acid, 62 parts by mass of styrene, 1 part by mass of 2-hydroxyethyl acrylate, 0.4 parts by mass of sodium dodecylbenzene sulfonate as an emulsifier, 150 parts by mass of ion-exchanged water, and 0.5 parts by mass of potassium persulfate as a polymerization initiator. After fully stirred, the temperature was raised to 50°C to initiate polymerization. Once the polymer conversion rate reached 96%, the reaction was quenched by cooling to afford a mixture containing a particulate binder (SBR). After adjusting the pH of the mixture containing a particulate binder to 8 by the addition of 5% sodium hydroxide aqueous solution, unreacted monomers were removed by thermal-vacuum distillation. Thereafter, the mixture was cooled to 30°C or below to afford a water dispersion containing a particulate binder.

Next, 100 parts by mass of synthetic graphite (volume-average particle diameter D50: 15.6 $\mu$m) as a negative electrode active material, 1 part by mass of solids of 2% aqueous solution of sodium salt of carboxymethyl cellulose ("MAC350HC" from Nippon Paper Industries Co., Ltd) as a thickener and ion-exchanged water were mixed to a solid concentration of 68% and mixed for 60 minutes at 25°C to afford a mixture. Subsequently, the mixture was adjusted to have a solid concentration of 62% by the addition of ion-exchanged and further mixed at 25°C for 15 minutes. To the mixture obtained were added 1.5 parts by mass of solids of the water dispersion containing the particulate binder and ion-exchanged water to a final solid concentration of 52% and further mixed for 10 minutes. The mixture was subjected to defoaming treatment under reduced pressure to afford a secondary battery negative electrode composition with good fluidity.

The secondary battery negative electrode composition was applied by a comma coater onto a 20 $\mu$m-thick copper foil (current collector) to a dry film thickness of on the order of 150 $\mu$m, and dried. This drying was performed by transporting the copper foil through an oven at 60°C at a rate of 0.5 m/min over 2 minutes. The copper foil was then heat-treated for 2 minutes at 120°C. Thus, a pre-press web of negative electrode was obtained. The pre-press web of negative electrode was rolled with a roll press to afford a post-press negative electrode in which the negative electrode mixed material layer is 80 $\mu$m in thickness.

<Preparation of Positive Electrode>

100 parts by mass of LiCoO$_2$ (volume-average particle diameter D50: 12 $\mu$m) as a positive electrode active material, 2 parts by mass of acetylene black ("HS-100" from Denka Company Ltd.) as a conductor, and 2 parts by mass of solids of polvinylidene difluoride ("#7208" from KUREHA Corporation) as a binder were mixed, and N-methyl pyrrolidone was then added to the mixture to a total solid concentration of 70%. These materials were mixed with a planetary mixer to prepare a secondary battery positive electrode composition.

The secondary battery positive electrode composition was applied by a comma coater onto a 20 $\mu$m-thick aluminum foil (current collector) to a dry film thickness of on the order of 150 $\mu$m, and dried. This drying was performed by transporting the aluminum foil through an oven at 60°C at a rate of 0.5 m/min over 2 minutes. The aluminum foil was then heat-treated for 2 minutes at 120°C. Thus, a web of positive electrode was obtained. The pre-press web of positive electrode was rolled with a roll press to afford a post-press positive electrode in which the positive electrode mixed material layer is 80 $\mu$m in thickness.

<Manufacture of Non-Aqueous Secondary Battery>

The positive electrode, coated separator (double side-coated separator) and negative electrode prepared above were cut into a 49 cm × 5 cm piece, a 55 cm × 5.5 cm piece, and a 50 cm × 5.2 cm piece, respectively. The positive and negative electrodes were placed such that the positive electrode mixed material layer faces one of the adhesive layers provided on both sides of the separator and the negative electrode mixed material layer faces the other adhesive layer to prepare a positive electrode/separator/negative electrode laminate. Using a winder, this laminate was wound into a roll. The roll was pressed at 70°C for 8 seconds under a pressure of 1.0 MPa into a flat form and enclosed by an aluminum packaging case as a battery outer package. Electrolysis solution (composition: ethylene carbonate/ethylmethyl carbonate/diethyl carbonate = 30/20/50 (by volume); electrolyte: 1M LiPF$_6$) was injected so as not to leave air. In order to tightly seal up the opening of the aluminum outer package, the aluminum package was closed by heat sealing at 150°C. In this way a winding type lithium ion secondary battery with a discharge capacity of 800 mAh was manufactured.

As shown in Table 1, Comparative Example 1 having a small weight fraction of molecules having a specific weight-average molecular weight showed low adhesion. Further, Comparative Example 2 having a high weight fraction of such molecules showed low-temperature output characteristics although adhesion was good. This appears to be due to elution of the molecules having a specific weight-average molecular weight into electrolysis solution. In contrast to Comparative Examples, Examples having weight fractions of such molecules falling within a specific range showed both good adhesion and good low-temperature output characteristics. It can be also seen from Table 1 that there is a certain proportional relationship between the amount of the molecular weight regulator and the weight fraction of the molecules having a specific weight-average molecular weight.

INDUSTRIAL APPLICABILITY

According to the present disclosure, it is possible to provide a composition for non-aqueous secondary battery adhesive layer which can provide an adhesive layer having good adhesion even by heat treatment at lower temperatures for shorter time. According to the present disclosure, it is also possible to provide a non-aqueous secondary battery adhesive layer which can exhibit good adhesion. According to the present disclosure, it is also possible to provide a non-aqueous secondary battery having good low-temperature output characteristics.

**Claims**

1. A composition for non-aqueous secondary battery adhesive layer, comprising organic particles and a binder,

   wherein the organic particles comprise

   (i) organic particles having a core-shell structure, and
   (ii) organic particles having a weight-average molecular weight of 100 to 10,000, and being present in the total organic particles in a weight fraction of 4.5% to 35%,

   wherein the weight-average molecular weight is measured according to the Method of Measuring Weight-Average Molecular Weight of Organic Particles described in the Examples,
   wherein the core is made of a polymer comprising monomer units selected from the group consisting of (meth)acrylate monomer units, acid group-containing monomer units, cross-linkable monomer units, aromatic vinyl monomer units, fluorine-containing (meth)acrylate monomer units, fluorine-containing aromatic diene monomer units, and (meth)acrylonitrile monomer units,
   wherein the shell is made of a polymer comprising monomer units selected from the group consisting of (meth)acrylate monomer units, acid group-containing monomer units, cross-linkable monomer units, aromatic vinyl monomer units, fluorine-containing (meth)acrylate monomer units, fluorine-containing aromatic diene monomer units, and (meth)acrylonitrile monomer units, and
   wherein the binder is selected from a styrene-butadiene copolymer, a styrene-acrylonitrile copolymer, and a (meth)acrylate polymer.

2. The composition for non-aqueous secondary battery adhesive layer according to claim 1, wherein the organic particles comprise a molecular weight regulator.

3. The composition for non-aqueous secondary battery adhesive layer according to claim 2, wherein the organic particles comprise the molecular weight regulator in an amount of 0.01 to 5 parts by mass per 100 parts by mass of the organic particles.

4. A non-aqueous secondary battery adhesive layer prepared by using the composition for non-aqueous secondary battery adhesive layer according to any one of claims 1 to 3.

5. A non-aqueous secondary battery comprising a positive electrode, a negative electrode, a separator, and an electrolysis solution,
   wherein at least one of the positive electrode, the negative electrode, and the separator comprises the non-aqueous secondary battery adhesive layer according to claim 4.

6. The non-aqueous secondary battery according to claim 5, wherein the non-aqueous secondary battery is of winding type or stacking type.

7. A method of manufacturing a non-aqueous secondary battery electrode, comprising:

   stacking the non-aqueous secondary battery adhesive layer according to claim 4 and an electrode; and
   pressing the non-aqueous secondary battery adhesive layer and the electrode.

8. The method of manufacturing a non-aqueous secondary battery electrode according to claim 7, wherein the electrode comprises an electrode mixed material layer binder, and the electrode mixed material layer binder comprises an aromatic vinyl monomer unit and an aliphatic conjugated diene monomer unit.

**Patentansprüche**

1. Eine Zusammensetzung für eine Klebeschicht für eine nicht-wässrige Sekundärbatterie, umfassend organische Partikel und ein Bindemittel,

   wobei die organischen Partikel umfassen:

   (i) organische Partikel mit einer Core-Shell-Struktur, und
   (ii) organische Partikel mit einem gewichtsgemittelten Molekulargewicht von 100 bis 10.000, wobei deren Gewichtsanteil an der Gesamtmenge der organischen Partikel von 4,5% bis 35% beträgt,

   wobei das gewichtsgemittelt Molekulargewicht ermittelt wird gemäß der in den Beispielen beschriebenen "Method of Measuring Weight-Average Molecular Weight of Organic Particles",
   wobei der Core besteht aus einem Polymer umfassend Monomereinheiten ausgewählt aus der Gruppe bestehend aus (Meth)acrylat-Monomereinheiten, Säuregruppen-haltigen Monomereinheiten, quervernetzbaren Monomereinheiten, aromatischen Vinyl-Monomereinheiten, Fluor-haltigen (Meth)acrylat-Monomereinheiten, Fluor-haltigen aromatischen Dien-Monomereinheiten, und (Meth)acrylonitril-Monomereinheiten,
   wobei die Shell besteht aus einem Polymer umfassend Monomereinheiten ausgewählt aus der Gruppe bestehend aus (Meth)acrylat-Monomereinheiten, Säuregruppen-haltigen Monomereinheiten, quervernetzbaren Monomereinheiten, aromatischen Vinyl-Monomereinheiten, Fluor-haltigen (Meth)acrylat-Monomereinheiten, Fluor-haltigen aromatischen Dien-Monomereinheiten, und (Meth)acrylonitril-Monomereinheiten, und
   wobei das Bindemittel ausgewählt ist aus einem Styrol-Butadien-Copolymer, einem Styrol-Acrylonitril-Copolymer, und einem (Meth)acrylat-Polymer.

2. Die Zusammensetzung für eine Klebeschicht für eine nicht-wässrige Sekundärbatterie gemäß Anspruch 1, wobei die organischen Partikel einen Molekülgewichts-Regulator umfassen.

3. Die Zusammensetzung für eine Klebeschicht für eine nicht-wässrige Sekundärbatterie gemäß Anspruch 2, wobei die organischen Partikel den Molekülgewichts-Regulator in einer Menge von 0,01 bis 5 Gewichtsteilen pro 100 Gewichtsteilen der organischen Partikel umfassen.

4. Eine Klebeschicht für eine nicht-wässrige Sekundärbatterie, hergestellt unter Verwendung der Zusammensetzung für eine Klebeschicht für eine nicht-wässrige Sekundärbatterie gemäß irgendeinem der Ansprüche 1 bis 3.

5. Eine nicht-wässrige Sekundärbatterie umfassend eine positive Elektrode, eine negative Elektrode, einen Separator, und eine Elektrolyse-Lösung,
   wobei mindestens eines von der positiven Elektrode, der negativen Elektrode, und dem Separator die Klebeschicht für eine nicht-wässrige Sekundärbatterie gemäß Anspruch 4 umfasst.

6. Die nicht-wässrige Sekundärbatterie gemäß Anspruch 5, wobei die nicht-wässrige Sekundärbatterie vom Wickel-Typ oder Schicht-Typ ist.

7. Ein Verfahren zur Herstellung einer Elektrode für eine nicht-wässrige Sekundärbatterie, umfassend:

   Schichten der Klebeschicht für eine nicht-wässrige Sekundärbatterie gemäß Anspruch 4 und einer Elektrode; und
   Pressen der Klebeschicht für eine nicht-wässrige Sekundärbatterie und der Elektrode.

8. Das Verfahren zur Herstellung einer Elektrode für eine nicht-wässrige Sekundärbatterie gemäß Anspruch 7, wobei die Elektrode ein Bindemittel für eine Mixed-Material-Elektrodenschicht umfasst, und wobei das Bindemittel für eine Mixed-Material-Elektrodenschicht eine aromatische Vinyl-Monomereinheit und eine aliphatische konjugiertes-Dien-Monomereinheit umfasst.

**Revendications**

1. Composition pour une couche adhésive d'une batterie rechargeable non aqueuse, comprenant des particules organiques et un liant,

dans laquelle les particules organiques comprennent

(i) des particules organiques ayant une structure coeur-enveloppe, et
(ii) des particules organiques ayant un poids moléculaire moyen en poids de 100 à 10 000, et étant présentes dans les particules organiques totales en une fraction pondérale de 4,5 % à 35 %,

dans laquelle le poids moléculaire moyen en poids est mesuré selon le Procédé de mesure du poids moléculaire moyen en poids des particules organiques décrit dans les Exemples,

dans laquelle le coeur est fait d'un polymère comprenant des motifs de monomère choisis dans le groupe constitué de motifs de monomère (méth)acrylate, de motifs de monomère contenant des groupes acides, de motifs de monomère réticulable, de motifs de monomère vinylique aromatique, de motifs de monomère (méth)acrylate contenant du fluor, de motifs de monomère diène aromatique contenant du fluor et de motifs de monomère (méth)acrylonitrile,

dans laquelle l'enveloppe est faite d'un polymère comprenant des motifs de monomère choisis dans le groupe constitué de motifs de monomère (méth)acrylate, de motifs de monomère contenant des groupes acides, de motifs de monomère réticulable, de motifs de monomère vinylique aromatique, de motifs de monomère (méth)acrylate contenant du fluor, de motifs de monomère diène aromatique contenant du fluor et de motifs de monomère (méth)acrylonitrile, et

dans laquelle le liant est choisi parmi un copolymère de styrène-butadiène, un copolymère de styrène-acrylonitrile et un polymère de (méth)acrylate.

2. Composition pour une couche adhésive d'une batterie rechargeable non aqueuse selon la revendication 1, dans laquelle les particules organiques comprennent un régulateur de poids moléculaire.

3. Composition pour une couche adhésive d'une batterie rechargeable non aqueuse selon la revendication 2, dans laquelle les particules organiques comprennent le régulateur de poids moléculaire en une quantité de 0,01 à 5 parties en masse pour 100 parties en masse des particules organiques.

4. Couche adhésive de batterie rechargeable non aqueuse préparée en utilisant la composition pour une couche adhésive d'une batterie rechargeable non aqueuse selon l'une quelconque des revendications 1 à 3.

5. Batterie rechargeable non aqueuse comprenant une électrode positive, une électrode négative, un séparateur et une solution d'électrolyse,
dans laquelle au moins l'un de l'électrode positive, de l'électrode négative et du séparateur comprend la couche adhésive de batterie rechargeable non aqueuse selon la revendication 4.

6. Batterie rechargeable non aqueuse selon la revendication 5, dans laquelle la batterie rechargeable non aqueuse est du type à enroulement ou du type à empilement.

7. Procédé de fabrication d'une électrode de batterie rechargeable non aqueuse, comprenant :

l'empilement de la couche adhésive de batterie rechargeable non aqueuse selon la revendication 4 et d'une électrode ; et
le pressage de la couche adhésive de batterie rechargeable non aqueuse et de l'électrode.

8. Procédé de fabrication d'une électrode de batterie rechargeable non aqueuse selon la revendication 7, dans lequel l'électrode comprend un liant de couche de matériau mixte d'électrode, et le liant de couche de matériau mixte d'électrode comprend un motif monomère vinylique aromatique et un motif monomère diène conjugué aliphatique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015064411 A
- US 2015044559 A1

- KR 20140137348 A